(19) **Europäisches Patentamt / European Patent Office / Office européen des brevets**

(11) **EP 2 494 709 B1**

(12) **EUROPEAN PATENT SPECIFICATION**

(45) Date of publication and mention of the grant of the patent:
**31.07.2019  Bulletin 2019/31**

(21) Application number: **10827029.9**

(22) Date of filing: **25.10.2010**

(51) Int Cl.:
*H04B 7/155* (2006.01)　　*H04W 16/16* (2009.01)
*H04L 5/00* (2006.01)　　*H04W 16/14* (2009.01)
*H04W 16/32* (2009.01)　　*H04W 88/10* (2009.01)
*H04L 12/24* (2006.01)　　*H04W 24/02* (2009.01)
*H04W 28/16* (2009.01)　　*H04W 48/08* (2009.01)
*H04W 64/00* (2009.01)　　*H04W 88/08* (2009.01)
*H04W 84/04* (2009.01)

(86) International application number:
**PCT/KR2010/007337**

(87) International publication number:
**WO 2011/052945 (05.05.2011 Gazette 2011/18)**

(54) **SYSTEM AND METHOD FOR SPECTRUM SPLIT FOR 1X AND HRPD OPERATIONS OF FEMTOCELL**

SYSTEM UND VERFAHREN ZUR SPEKTRUMSTEILUNG FÜR 1X- UND HRPD-OPERATIONEN VON FEMTOZELLEN

SYSTÈME ET PROCÉDÉ DE SUBDIVISION DU SPECTRE POUR LES MODES DE FONCTIONNEMENT 1X ET HRDP D'UNE FEMTO-CELLULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **26.10.2009   US 589714**

(43) Date of publication of application:
**05.09.2012  Bulletin 2012/36**

(73) Proprietor: **Samsung Electronics Co., Ltd.**
**Suwon-si, Gyeonggi-do, 443-742 (KR)**

(72) Inventors:
• **RAJASIMMAN, Vijayasimman**
  **Collin County, TX 75074 (US)**

• **JUBIN, John**
  **Dallas County, TX 75081 (US)**
• **THADASINA, Nivedan**
  **Collin County, TX 75013 (US)**

(74) Representative: **Nederlandsch Octrooibureau**
**P.O. Box 29720**
**2502 LS The Hague (NL)**

(56) References cited:
**WO-A2-2008/093100　　WO-A2-2009/111392**
**US-A1- 2007 097 983　　US-A1- 2009 061 892**
**US-A1- 2009 221 295　　US-A1- 2009 233 605**

## Description

### Technical Field

The present application relates generally to wireless communications networks and, more specifically, to control of Femtocells in a wireless communications network.

### Background Art

Femtocells are low-power wireless base stations, also referred to as access points, that operate in licensed spectrum to connect standard mobile devices. Femtocells provide short range communications using residential DSL or cable broadband connections and are typically designed for use in a home or small business.

WO 2008/093100 A2 relates to a method of controlling a base station in a cellular wireless communications network, the method comprising, within the base station, autonomously and dynamically adapting a maximum value for a total transmit power of the base station, such that interference between the base station and other access points in the vicinity is minimized.

WO 2009/111392 A2 relates to a method wherein Interference is avoided by selecting only subcarriers not allocated by the macro cell and subcarriers allocated to users not nearby to the femtocell.

### Disclosure of Invention

### Technical Problem

Using a femtocell, a service coverage area can be extended indoors, especially where access may be limited or unavailable.

### Solution to Problem

The invention is defined in independent claims 1 and 6.

### Advantageous Effects of Invention

The femtocell base station can receive this information and can select an operation carrier from the list of carriers available per a technology type on a county level. The femtocell base station also can use the list of carriers to determine locally available carriers. If no available carriers exist, the femtocell base station can select an operation carrier based on common carriers used by Overlay Macro base stations.

### Brief Description of Drawings

For a more complete understanding of the present disclosure and its advantages, reference is now made to the following description taken in conjunction with the accompanying drawings, in which like reference numerals represent like parts:

FIGURE 1 illustrates an exemplary wireless network according to embodiments of the present disclosure;
FIGURE 2 illustrates an exemplary femto base according to embodiments of the present disclosure;
FIGURE 3 illustrates an exemplary Femtocell Management System (FMS) according to embodiments of the present disclosure;
FIGURE 4 illustrates an exemplary wireless network distributed through a number of counties according to an exemplary embodiment of the disclosure;
FIGURE 5 illustrates a method for configuring a femtocell base station according to embodiments of the present disclosure; and
FIGURE 6 illustrates a method for selecting carriers in a femtocell base station according to embodiments of the present disclosure.

### Best Mode for Carrying out the Invention

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

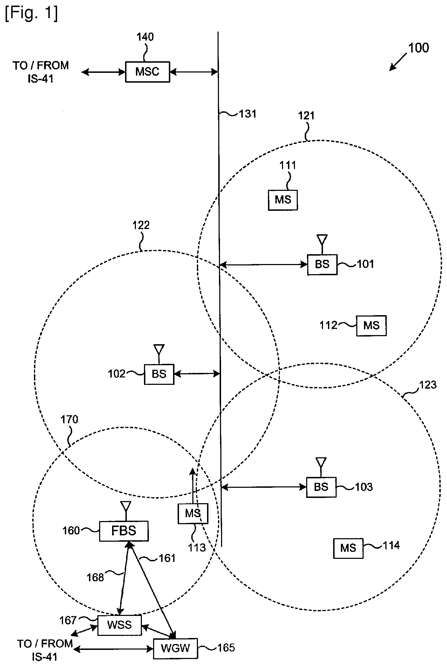

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless network.

FIGURE 1 illustrates exemplary wireless network 100 according to embodiments of the present disclosure. The embodiment of wireless network 100 illustrated in FIGURE 1 is for illustration only. Other embodiments of the wireless network 100 could be used without departing from the scope of this disclosure.

Wireless network 100 comprises a plurality of cells 121-123, each containing one of the base stations, BS 101, BS 102, or BS 103. Base stations 101-103 communicate with a plurality of mobile stations (MS) 111-114 over code division multiple access (CDMA) channels). Mobile stations 111-114 may be any suitable wireless devices (e.g., conventional cell phones, PCS handsets, personal digital assistant (PDA) handsets, portable computers, telemetry devices) that are capable of communicating with base stations 101-103 via wireless links.

Dotted lines show the approximate boundaries of cells 121-123 in which base stations 101-103 are located. The cells are shown approximately circular for the purposes of illustration and explanation only. It should be clearly understood that the cells may have other irregular shapes, depending on the cell configuration selected and natural and man-made obstructions.

As is well known in the art, each of cells 121-123 is comprised of a plurality of sectors, where a directional antenna coupled to the base station illuminates each sector. The embodiment of FIGURE 1 illustrates the base station in the center of the cell. Alternate embodiments may position the directional antennas in corners of the sectors. The system of the present disclosure is not limited to any particular cell configuration.

In some embodiments, each of BS 101, BS 102 and BS 103 comprises a base station controller (BSC) and one or more base transceiver subsystem(s) (BTS). Base station controllers and base transceiver subsystems are well known to those skilled in the art. A base station controller is a device that manages wireless communications resources, including the base transceiver subsystems, for specified cells within a wireless communications network. A base transceiver subsystem comprises the RF transceivers, antennas, and other electrical equipment located in each cell site. This equipment may include air conditioning units, heating units, electrical supplies, telephone line interfaces and RF transmitters and RF receivers. For the purpose of simplicity and clarity in explaining the operation of the present disclosure, the base transceiver subsystems in each of cells 121, 122 and 123 and the base station controller associated with each base transceiver subsystem are collectively represented by BS 101, BS 102 and BS 103, respectively.

BS 101, BS 102 and BS 103 transfer voice and data signals between each other and the public switched telephone network (PSTN) (not shown), or any IS-41 communication network as is known in the art, via communication line 131 and mobile switching center (MSC) 140. Line 131 also provides the connection path for control signals transmitted between MSC 140 and BS 101, BS 102 and BS 103 that establish connections for voice and data circuits between MSC 140 and BS 101, BS 102 and BS 103.

Communication line 131 may be any suitable connection means, including a T1 line, a T3 line, a fiber optic link, a network packet data backbone connection, or any other type of data connection. Line 131 links each vocoder in the BSC with switch elements in MSC 140. The connections on line 131 may transmit analog voice signals or digital voice signals in pulse code modulated (PCM) format, Internet Protocol (IP) format, asynchronous transfer mode (ATM) format, or the like.

MSC 140 is a switching device that provides services and coordination between the subscribers in a wireless network and external networks, such as the IS-41, PSTN, or Internet. MSC 140 is well known to those skilled in the art. In some embodiments of the present disclosure, communications line 131 may be several different data links where each data link couples one of BS 101, BS 102, or BS 103 to MSC 140.

The wireless network 100 includes a Femtocell base station (FBS) 160. FBS 160 includes components analogous to those found in macro base stations BS 101, BS 102 and BS 103. As such, FBS 160 comprises a femto base station controller (FBSC) and one or more femto base transceiver subsystem(s) (FBTS). FBS 160 communicates with mobile stations in its served area using IS-95, CDMA or any other cellular communications standard.

Voice bearer traffic is transferred between the FBS 160 and the IS-41 network (e.g., PSTN) via communication line 161, Wireless Gateway (WGW) 165. Signaling/control traffic is transferred between the FBS 160 and the IS-41 network via communication line 168 and Wireless Soft Switch (WSS) 167. The WGW 165 and WSS 167 are coupled via a backhaul connection (not shown), e.g., the IS-41, to the MSC 140. The WGW 165 provides a bearer path between FBS 160 and MSC 140 via the IS-41. The WSS 167 provides a signaling path FBS 160 and WGW 165 as well as to the MSC 140 via the IS-41.

A dotted line shows the approximate boundary of a cell 170 (e.g., coverage area) in which FBS 160 is located. The cell is shown approximately circular for the purposes of illustration and explanation only. It should be clearly understood that the cell may have an irregular shape, depending on the cell configuration selected and natural and man-made obstructions.

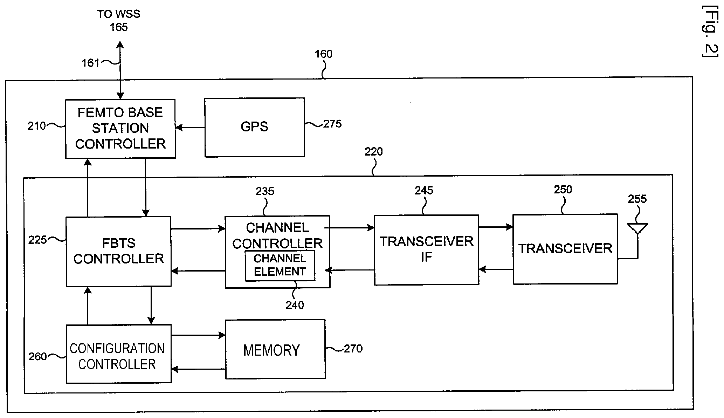

FIGURE 2 illustrates exemplary femto base station 160 in greater detail according to one embodiment of the present disclosure. The embodiment of femto base station 160 illustrated in FIGURE 2 is for illustration only. Other embodiments of the femto base station 160 could be used without departing from the scope of this disclosure.

Femto base station 160 comprises femto base station controller (FBSC) 210 and femto base transceiver subsystem (FBTS) 225. Femto base station controllers and femto base transceiver subsystems were described previously in connection with FIGURE 1. FBSC 210 manages the resources in FBTS 220. FBTS 220 comprises FBTS controller 225, channel controller 235, transceiver interface (IF) 245, RF transceiver unit 250, and antenna array 255. Channel controller 235 comprises a plurality of channel elements, including exemplary channel element 240. FBTS 220 also comprises a configuration controller 260. The embodiment of configuration controller 260 and memory 270 included within FBTS 220 is for illustration only. Configuration controller 260 and memory 270 can be located in other portions of FBS 160, such as for example, within FBTS 220 without departing from the scope of this disclosure.

FBSC 210 comprises processing circuitry and memory capable of executing an operating program that controls the overall operation of FBTS 220. Under normal conditions, FBSC 210 directs the operation of channel controller 235, which contains a number of channel elements, including channel element 240, that perform bi-directional communications in the forward channels and the reverse channels. A forward channel refers to a channel in which signals are transmitted from the base station to the mobile station. A reverse channel refers to a channel in which signals are transmitted from the mobile station to the base station. Transceiver IF 245 transfers the bi-directional channel signals between channel controller 240 and RF transceiver unit 250.

Antenna array 255 transmits forward channel signals received from RF transceiver unit 250 to mobile stations in the coverage area of FBS 160. Antenna array 255 also sends to transceiver 250 reverse channel signals received from mobile stations in the coverage area of FBS 160.

According to some embodiments, configuration controller 260 is operable to store frequency allocation information in a memory 270. Memory 270 can be any computer readable medium, for example, the memory 270 can be any electronic, magnetic, electromagnetic, optical, electro-optical, electro-mechanical, and/or other physical device that can contain, store, communicate, propagate, or transmit a computer program, software, firmware, or data for use by the microprocessor or other computer-related system or method. Memory 270 comprises a random access memory (RAM) and another part of memory 270 comprises a Flash memory, which acts as a read-only memory (ROM).

Femto base station 160 also includes a Global Positioning System (GPS) receiver 275. The GPS receiver 275 is configured to determine a geographical position of FBS 160 and timing information. GPS satellites broadcast signals from space that are picked up and identified by the GPS receiver 275. The GPS receiver 275 then calculates and provides three-dimensional geographical location (latitude, longitude, and altitude) information plus the time. The FBSC 210 can be configured to transmit the geographical position obtained from the GPS receiver 275.

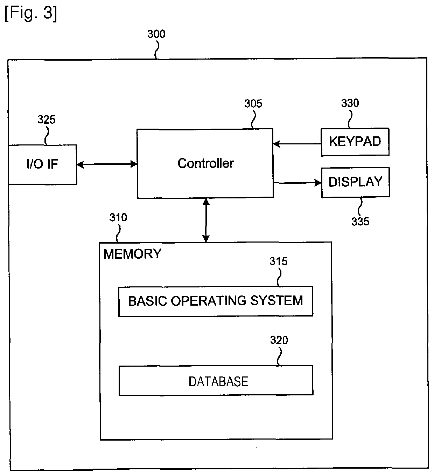

FIGURE 3 illustrates an exemplary Femtocell Management System (FMS) according to embodiments of the present disclosure. The embodiment of the FMS 300 shown in FIGURE 3 is for illustration only. Other embodiments could be used without departing from the scope of this disclosure.

The FMS 300 is configured to control a number of femtocells, including, for example, FBS 160. The FMS 300 can be a stand-alone device. The FMS 300 includes a controller 305. The controller 305 can control the number of femtocells during initial configuration. The FMS 300 also includes a memory 310.

Memory 310 can be any computer readable medium, for example, the memory 310 can be any electronic, magnetic, electromagnetic, optical, electro-optical, electro-mechanical, and/or other physical device that can contain, store, communicate, propagate, or transmit a computer program, software, firmware, or data for use by the microprocessor or other computer-related system or method. Portions of memory 310 can comprise a random access memory (RAM) and another part of memory 310 can comprise a Flash memory, which acts as a read-only memory (ROM).

The memory can store a basic operating system 315. The basic operating system 315 can include one or more sets of instructions configured to be executed by controller 305 to perform one or more functions of the FMS 300. Additionally, memory 310 can store one or more databases 320 (discussed in further detail herein below).

The FMS 300 can include an I/O interface 325, keypad 330 and display 335. The I/O interface 325, keypad 330 and display 335 can be coupled to controller 305 such that controller 305 is responsive to inputs from I/O interface 325 and keypad 330 and configured to control outputs to I/O interface 325 and display 335. In some embodiments, FMS 300 can communicate via the I/O interface and an communication link, such as for example, an IS-41 link, to one or more femtocell base stations, other femtocell management systems, or other networks.

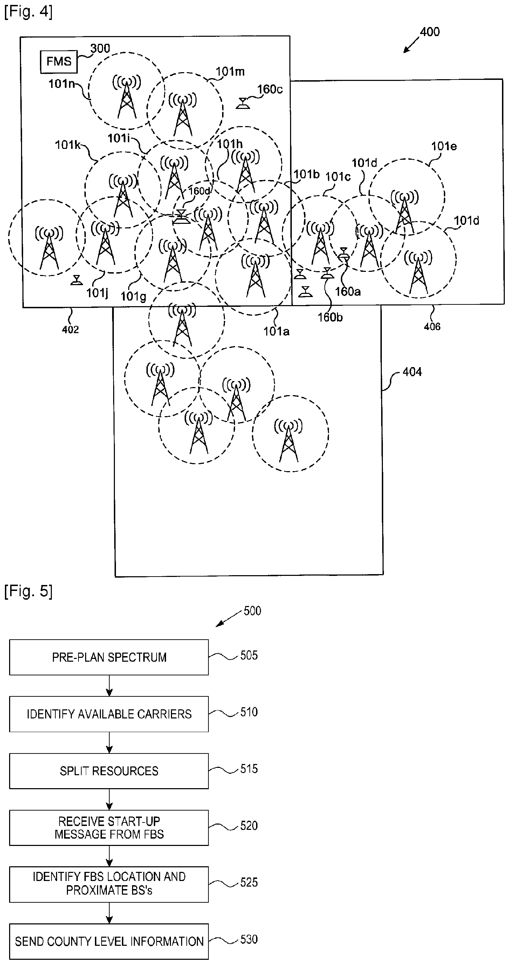

FIGURE 4 illustrates an exemplary wireless network distributed through a number of counties according to an exemplary embodiment of the disclosure. The embodiment of the wireless network shown in FIGURE 4 is for illustration only. Other embodiments could be used without departing from the scope of this disclosure. Furthermore, it should be understood that the examples illustrated in FIGURE 4 are not drawn to scale or proportion.

In wireless network 400, such as, for example, a CDMA Macro network, the wireless network operator performs frequency planning to allocate the frequency resources. For example, the operator can perform frequency planning for every county 402, 404, 406 or market to manually split the resources by technology type such as, for example, for 1x and High-Rate Packet Data (HRPD) operations. HRPD can also be refered to as Evolution Data Only (EVDO). Frequency planning is performed to enhance uniformity of resource usage across county 402, 404, 406 (or market). However, any remaining or un-used spectrum may not pre-planned and split until an actual need for the resource arises.

Further, channel spectrum is allocated on a county basis. Each operator/provider can be allocated a portion of the spectrum for use in each of the counties 402, 404, 406. For example, a first service provided (also referred herein as "first provider") is allocated a first portion of the spectrum for use in each of the counties 402, 404, 406 and a second service provider (also referred herein as "second provider") is allocated a second portion of the spectrum for use in each of the counties 402, 404, 406.

Thereafter, each provider partitions their portions of the spectrum for use in each respective county, such as, for example, in the first county 402, second county 404, and third county 406. For example, the first provider can be allocated ten (10) channels for use in the third county 406. Additionally, the first provider may be allocated the ten (10) channels for use in each of the other two counties 402, 404. Alternatively, the first provider may be assigned more or less than (10) channels (also referred to as "carriers") in each of the other two counties 402, 404. The first provider partitions the ten (10) channels to dedicate usage for HRPD and to dedicate usage for IX. Depending on the capacity requirements, the first carrier chooses three (3) channels for 1x and two (2) channels for HRPD. As such, in the third county 406, the macro BSs 101c-101f follow the partition of three (3) channels for 1x and two (2) channels for HRPD. Therefore, the first provider has left five (5) channel unassigned.

The femtocell base stations may attempt to use the unassigned portions of the spectrum first in order to avoid interference with the macro base stations. For example, a new femtocell base station, such as, for example, FBS 106d, attempts to use the unassigned (e.g., unused) portion of the spectrum first. If no unassigned portion of the spectrum exists or is avaible, then the femtocell base station can attempt to use a portion of the spectrum that has been allocated to the macro base stations. The femtocell base station can attempt to use the allocated portion of the spectrum that matches the technology (e.g., IX or HRPD) that the femtocell base station will be using.

When 1x-HRPD Combo femtocells are deployed, if the femtoCells are allowed to choose any of the available spectrum for 1x and HRPD operations, juggling of carriers in a particular county 402, 404, 406 may occur. Therefore, a uniformity as to which carriers are used for 1x and which are used for HRPD may not be retained in one or more of the counties 402, 404, 406.

Furthermore, when two more femtocells are located adjacent to each other, confusion can result if two adjacent femtocells randomly choose the same carrier for conflicting 1x and HRPD operations. For example, if a FBS 160a decides to perform over the air scan to sense RF condition in a particular carrier, FBS 160a may determine a carrier is available for IX. However, FBS 160b may be using the carrier for HRPD. Since FBS 160a only sensed for IX, FBS 160a was unable to detect the HRPD usage by FBS 160b. Therefore, FBS 160a incorrectly determined that the carrier was availabe for IX since the adjacent femtoCell, FBS 160b, randomly chose the same carrier for HRPD operation. To avoid an interference, FBS 160a may randomly attempt to sense carrier usage using different technologies until FBS 160a detects a matching usage. For example, FBS 160a may first attempt to sense for IX usage on a carrier. If no usage is detected, FBS 160a may then attempt to detect HRPD usage on the carrier. However, this approach may require more time to detect usage on both 1x and HRPD for each of the carriers.

In some embodiments, the femtocell system includes an automatic partition selection unit wherein the femtoCell management system can split the available carrier resources in a county 406 for HRPD vs 1x operations without the need for manual planning by the operator. That is, the femtocell system can split, automatically (for example, without operator action) the available carrier resources in the county 406. This county level co-ordination ensures that a uniformity can be maintained as to how the femtocells choose carriers for 1x and HRPD operation throughout the county 406.

As shown in FIGURE 4, the wireless network 400 can be located in a number of counties 402, 404, 406. It will be understood that illustration of three counties 402, 404, 406 is for example purposes and the wireless network 400 can be located in any number of counties. Each of the counties includes a plurality of BS's 101 and a number of FBS's 160. Each of the BS's 101a-101n illustrated in FIGURE 4 can comprise the same structure and/or functionality as BS 101 illustrated in FIGURE 1. Further, each of the FBS's 160a-160d shown in FIGURE 4 can comprise the same structure and/or fuctionality as FBS 160 shown in FIGURE 1.

Dotted lines show the approximate boundaries of cells in which base stations 101a-101n are located. The cells are shown approximately circular for the purposes of illustration and explanation only. It should be clearly understood that the cells may have other irregular shapes, depending on the cell configuration selected and natural and man-made obstructions. It should also be clear that although, for clarity, no dotted lines are shown for the cells in which femtocells 160a-160d are located, each of the femtocells 160a-160d includes an associated cell for its coverage area.

FBS 160a-160d can be controlled by FMS 300. The FMS 300 also can contain databases that include spectrum information. The database can include county spectrum databases and Macro databases. The spectrum information can include county level spectrum information owned by the operator. The Macro database information can includes data pertaining to the existing Macros. Macro database can include information such as carriers used by Macro for 1x and HRPD, a county in which the Macro is located, and so forth.

The wireless network 400 includes at least one FMS 300. The FMS 300 can be a located in any one of the counties 402, 404, 406. In some embodiments, two or more of the counties 402, 404, 406 include an FMS 300. In embodiments with more than one FMS 300, each FMS 300 can be configured to coordinate functions with the other FMS's 300. Additionally or alternatively, each FMS 300 can be configured to follow a protocol such that the activities of a first FMS 300 do not interfere with activities of a second FMS 300.

The FMS 300 is configured to process county spectrum database information and Macro database spectrum information for one or more counties 402, 404, 406. The FMS 300 can process the county spectrum database information and Macro database spectrum information on a per county basis. As part of processing the county spectrum database and the Macro database, the FMS 300 can use the county spectrum database information and the Macro database information to derive the available spectrum in each county 402, 404, and 406. The FMS 300 can derive the available spectrum without operator action. The county spectrum database provides the legal channels owned in each county. From the Macro database, the FMS 300 can ascertain the carriers used by Macro base stations (for example, BS 101a-101n) that are deployed in each county 402, 404, and 406. For example, the FMS 300 can determine the carriers used by BS 101c-101f that are deployed in the third county 406. The FMS 300 also can use county spectrum database information and Macro database spectrum information to determine the un-used carriers in each county.

The FMS 300 includes a configuration table. For example, configuration table (not illustrated) can be stored in memory 310. After the FMS 300 determines the un-used carrier information for each county 402, 404, 406, the FMS 300 can use the configurable table to determine the available carriers for FemtoCell 1x and HRPD operation in each county 402, 404, 406. For example, the FMS 300 can determine the available carriers for FemtoCell 1x and HRPD operation for count 402 after the FMS 300 determines the un-used carrier information for county 402. In some embodiments, the FMS 300 can determine the available carriers for FemtoCell 1x and HRPD operation for county 402 after the FMS 300 determines the un-used carrier information for at least two counties 402, 404. The configuration table can provide a resource split rule that can provide the operator with flexibility to partition the resources. For example, if 1x operation is to be prioritized compared to HRPD, more carriers can be dedicated to 1x among the available carriers compared to HRPD operation. Also, in this case, if there are limited available carriers, all of the limited available carriers can be dedicated for 1x operation.

When a femtocell base station is initially placed in service by a user, the femtocell base station informs the operator that it is "ON" and where it is. For example, when a user powers "ON" FBS 160a, the GPS receiver 275 in FBS 160a computes the geographical location of FBS 160a. FBS 160a then reports to the geographical location information (for example, the latitude and longitude) to the FMS 300.

The FMS 300 uses the geographical location information received from FBS 160a to determine where the FBS 160a is located. The FMS 300 can identify that the FBS 160a is located in the third county 406. Thereafter, the FMS 300 can send a macro list to FBS 160a. The macro list includes a listing of the macro base stations also located in the third county 406. Additionally, the FMS 300 can access the database 320, the configuration table, or both, and send a list of the channels used by the macros in the third county 406. For example, the FMS 300 can send a list of that identifies that BS 101c, BS 101d, BS 101e and BS 101f are located in the third county 406. The list can also include a listing of the frequency allocation to the third county 406 (for example, a listing of all the carriers allocated to the third county 406) and the frequency assignments for the third county 406 (for example, a listing of the partitioned carriers to the third county 406). Thereafter, FBS 160a can use the list of frequency allocations and the list of frequency assignments to determine the available (i.e., un-used) channels for use in the third county 406.

The FMS 300 can provide the County Level Available carrier information for 1x and HRPD to FBS 160a as part of a configuration download during power up. Additionally, FMS 300 also can provide the County level Common carrier information (described in further detail herein below). The Common carrier information includes the HRPD carriers used by the Macros in the third county 406.

To identify the Common carrier information, the FMS 300 accesses, for each county 402, 404, 406, the macro database to identify the carriers assigned to each of the macro base stations, BS 101a-101n, for IX and for HRPD. For example: FMS 300 accesses the macro database and identifies that BS 101c-f are assigned as follows:

BS 101c:

1x Carriers - 384, 425
HRPD Carriers - 25, 50

BS 101d:

1x Carriers - 384, 425, 466
HRPD Carriers - 25

BS 101e:

1x Carriers - 384, 425, 507
HRPD Carriers - 25, 50

BS 101f:

1x Carriers - 384, 466
HRPD Carriers - 50, 75

Therefore, FMS 300 determines that the 1x County Level Common/Macro Carriers used are: 384, 425, 466 and 507. FMS 300 also determines that the HRPD County Level Common/Macro carriers used are: 25, 50 and 70.

The FMS 300 also can access the County spectrum database to obtain a listing of the all the carriers allocated to each county 402, 404, 406. For example, FMS 300 accesses the County spectrum database and identifies the following for the third county 406:

Total carriers in the third county 406:

Cellular: 384, 425, 466, 507, 548, 589, 630, 770;
PCS: 25, 50, 75, 100, 125, 150, 175, 200.

FMS 300 can use the list of Total carriers in the third county 406 and the list of Common carriers to determine the total available carriers in the third county 406. For example, the FMS 300 can remove (i.e., subtract) the list of Common carriers from the list of Total carriers to obtain a list of unused (i.e., available) carriers. Based on the above example, the FMS can determine the following:

Total Available carriers in the County:

Cellular: 548, 589, 630, 770
PCS: 100, 125, 150, 175, 200

Therefore, the available HRPD Carriers in the county for PCS are: 200, 175, 150, and 125 (Based on the configuration table discussed in further detail below, four HRPD available carriers are chosen). Further, the available 1x Carriers in the county for Cellular are: 548, 589, 630, 770 and PCS: 100

Additionally, the FMS 300 also can be configured to partition the unused carriers based on the configureation table. The configuratin table can provide resource splitting for County level HRPD and IX available carriers based at least in part on the number of unused (i.e., available) Frequency Assignments (FAs). The FMS 300 can use the configuration table to split the unused carriers for use as IX and HRPD in each respective county 402, 404, 406.

For example, the configuration table can be as illustrated in Table 1. It will be understood that the configuration table shown in Table 1 is an example configuration table for illustration only and other configuration tables with different nubmers of FAs, different ratios and/or formalations or other combinations could be used without departing from the scope of this disclosure.

Table 1

[Table 1]

[Table]

| Num. of Avail FAs | Num of Avail HRPD FA | Num of Avail 1X FA |
|---|---|---|
| 0 | 0 | 0 |
| 1 | 0 | 1 |
| 2 | 0 | 2 |
| 3 | 1 | 2 |
| 4 | 1 | 3 |
| 5 | 2 | 3 |
| 6 | 3 | 3 |
| 7 | 3 | 4 |
| ≥8 | 4 | ≥4 |

As shown in Table 1, when there are three (3) availabe FAs in the county, the FMS 300 partitions the FAs to be used as one (1) HRPD carrier and two (2) IX carriers. Additionally, when there are eight (8) available FAs in the county, the FMS 300 partitions the FAs to have four (4) available HRPD carriers and four (4) available IX carriers. Further, when there are more than eight (8) availabe FAs in the county, the FMS 300 partitions the FAs to have four (4) HRPD available carriers and the remaining FAs as available IX carriers. For example, when there are ten (10) availabe FAs in the county, the FMS 300 partitions the FAs to have four (4) available HRPD carriers and six (6) available IX carriers.

Therefore, the FMS 300 uses the County Spectrum database, Macro database, and the configuration table to pre-plan the partitioning of the available resources (e.g., available carriers) for the third county 406. The FMS 300 also pre-plans the remaining counties 402, 404 in the same or similar manner. Thereafter, the FMS 300 can send to a new or existing femtocell base station the Total carriers for a county, Common carriers used by the macros in the county, the total available carriers for the county, the total available IX carriers for the county and the total available HRPD carriers for the county. For example, FMS 300 can send to FBS 160a, the Total carriers for the third county 406, Common carriers used by the macros in the third county 406, the total available carriers for the third county 406, the total available IX carriers for the third county 406 (e.g., County level available information for IX), and the total available HRPD carriers for the third county 406 e.g., County level available information for HRPD). Additionally, the county level information, such as, for example, the Common carrier information, can include a listing of the FAs for each base station, BS 101c-101f. In some embodiments, the Common carrier information sent by FMS 300 includes a listing of only a portion of the FAs for each base station, BS 101c-101f. For example, FMS 300 can include in the Common carrier information a listing of the ten (10) macro base stations located in closest proximity to the femtocell base station.

FBS 160a can receive the County level available carrier information for 1x and HRPD, and also the County level HRPD Common carrier information during the configuration download from the FMS 300 during power up. In some embodiments, the FBS 160a receives the Total carriers for the third county 406, Common carriers used by the macros in the third county 406, the total available carriers for the third county 406, the total available IX carriers for the third county 406, and the total available HRPD carriers for the third county 406. FBS 160a then is able to perform an over the air scan knowing exactly which of the carriers are allowed for 1x and HRPD.

FBS 160a also includes the flexibility to use additional local carriers not listed in the available carriers and are not used by the overlay Macros (e.g., BS 101c-101d whose cells overlay FBS 160a). BS 101c and BS 101d may not be using all the carriers listed in the Common carrier used by the macros for 1x and for HRPD in the third county 406. The FBS 160a can identify and use additional local carriers a result of the FMS 300 using county level information to determine available local carriers. Since some of the county level used carriers (e.g., county level Common carriers) are not used by BS 101c-101d (the immediate overlay Macros of FBS 160a), FBS 160a is able to use these county level Common carriers that are not used by either BS 101c or BS 101d. Therefore, additional local available carriers can be determined by FBS 160a based on a local Macro condition. FBS 160a can determine the additional local available carriers for 1x using Equation 1:

[Equation 1]

$$C_{1XAdd}=T_{cc}-CA_{1X}-CA_{HRPD}-CC_{HRPD}-CO_{1X}$$

In Equation 1, $C_{1XAdd}$ is the additional local carriers; $T_{cc}$ is Total Carriers in the county; $CA_{1X}$ is County Level Available carriers for 1x; CAHRPD is County Level Available Carriers for HRPD; $CC_{HRPD}$ is County Level Common carriers used by Macros for HRPD; and $CO_{1X}$ is Common carriers used by local Overlay Macros 1x carriers.

FBS 160a can determine the additional local available carriers for HRPD using Equation 2:

$$[\text{Equation 2}]$$

$$C_{HRPDADD}= CC_{HRPD}-CO_{HRPD}$$

In Equation 2, $C_{HRPDADD}$ is the additional local carriers for HRPD; $CC_{HRPD}$ Common carriers used by Macros at county level for HRPD; and $CO_{HRPD}$ is HRPD Carriers used by local overlay Macro. Using Equations 1 and 2, FBS 16 can determine that the following additional carriers are available:

Additional local carriers for 1x:
Cellular: 570
Additional local carriers for HRPD:
PCS:75

Accordingly, additional local available carriers can be determined by a femtocell base station based on a local Macro condition in each county. For example, FBS 160c is not located in an area where an overlay Macro base station exists. Therefore, based on local Macro condition, FBS 160c can determine that all the Total Carriers in the second county 402 are available for use. In another example, FBS 160d is located in the cells of BS 101g, BS 101h and BS 101i and in proximity to BS 101j, BS 101k, BS 101m and BS 101n. Therefore, based on local Macro condition, FBS 160d may determine that no additional local carriers are available for use.

Therefore, a number of femtocells, such as for example, FBS 160a and FBS 160b, are configured to select an operational IX carrier and an operation HRPD carrier based on the information received from the FMS 300. As such, FBS 160a can select a IX carrier and/or an HRPD carrier without selecting a carrier that may interfere with a IX carrier and/or an HRPD carrier selected by the and FBS 160b.

If no available (i.e., unassigned or unused) carriers are present, then FBS 160a can re-use the carriers used by BS 101c-101e. For example if only available 1x carriers are present, then for HRPD operation, the FBS 160a will re-use a carrier selected from the overlay Macro HRPD carriers (e.g., re-use the HRPD for BS 101c and BS 101d).

FBS 160a then can select an HRPD operational carrier from the list of County Level Available HRPD carriers and additional local available HRPD carriers. Similarly FBS 160a can select a 1x operational carrier from the list of County Level Available 1x carriers and additional local available 1x carriers.

Accordingly, using the above approach the FMS 300 can help ensure that a county level resource partition of HRPD and 1x carriers is maintained, automatically, without any manual planning by an operator. This provides uniformity of resource usage by the femtocells across the county and helps avoid a juggling of the carriers. The FMS 300 also decreases a chance of for confusion when the femtocell performs Over the Air scan since the femtocell can now know whether the carrier to be scanned is used for HRPD or 1x and can perform the scan accordingly.

FIGURE 5 illustrates a method for configuring a femtocell base station according to embodiments of the present disclosure. The embodiment of the method 500 shown in FIGURE 5 is for illustration only. Other embodiments could be used without departing from the scope of this disclosure.

In step 505, the FMS starts to pre-plan the Spectrum for one or more counties. The FMS accesses the County Spectrum database to determine the Total carriers allocated to each county for which the FMS is responsible for planning. The FMS also accesses the Macro database to determine the Common carriers assigned to the base stations in each county. The Macro database includes an identification of each macro base station located in the county, a location corresponding to each macro base station located in the county, and a listing of the carriers assigned to each macro base station located in the county. The FMS can determine the Common carriers by identifying the carriers assigned to each of the macro base stations in a county. The FMS saves each the carriers used by at least one macro base station in a Common carriers list.

In step 510, the FMS identifies the available carriers for one or more counties. The FMS uses the Total Carriers for the county and the Common Carriers for the County to identify those carriers that are allocated to the county but that are unused by the macro base stations located in the county. For example, the FMS can remove or subtract the carriers listed in the Common carriers list from the carriers listed in the Total Carriers to obtain the list of unused carriers. The FMS then saves the list of carriers as a list of available carriers for the county.

After the FMS identifies the available carriers, the FMS splits the resources in step 515. The FMS splits the resources by partitioning the available carriers into available IX carriers and available HRPD carriers. The FMS can use a configuration table to determine how many available carriers are allocated for use as available IX carriers and how many carriers are allocated as available HRPD carriers. For example, using the configuration table, the FMS determines that there will be N available IX carriers and M available HRPD carriers. Thereafter, the FMS assigns N number of carriers as the available IX carriers and M number of carriers as the available HRPD carriers.

In step 520, the FMS receives a start-up message from a new FBS. The start-up message indicates that a user has activated, or otherwise powered-up, a femtocell base station in the county. The start-up message includes an identifier for the FBS and a geographical location of the FBS. The geographical location can be, for example, a latitude and a longitude.

In step 525, the FMS identifies the FBS location. The FMS determines in which county the FBS is located. The FBS also determines a number of macro base stations that are in proximity to the FBS. For example, the FMS uses the geographical location received in the start-up message to identify ten (10) macro base stations that are located in proximity to the FBS.

In step 530, the FMS sends County Level Information to the FBS as part of a configuration download. The County Level Information can include one or more of: a list of the Total Carriers for the county in which the FBS is located, a list of the Common carriers used by the macros located in the same county in which the FBS is located, a list of the available IX carriers for the county in which the FBS is located, a list of the available HRPD carriers for the county in which the FBS is located, a list of the macro base stations proximate to the FBS, a list of the locations of the macro base stations either proximate to the FBS or in the same county in which the FBS is located, and a list of the carriers used by each macro base station that is included in the list of macro base stations proximate to the FBS. In some embodiments, the list of macro base stations proximate to the FBS includes only those macro base stations that are located in the same county in which the FBS is located. In some embodiments, the list of macros base stations proximate to the FBS includes only those macro base stations that are located in the same market in which the FBS is located.

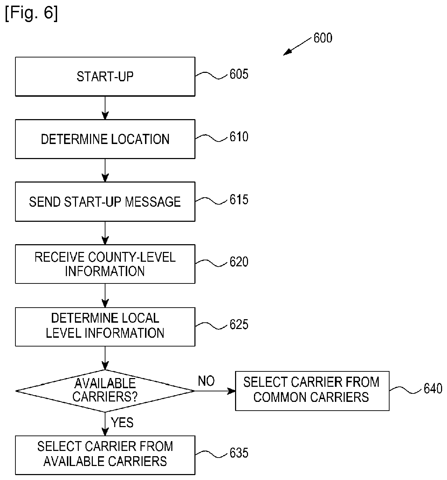

FIGURE 6 illustrates a method for selecting carriers in a femtocell base station according to embodiments of the present disclosure. The embodiment of the method 600 shown in FIGURE 6 is for illustration only. Other embodiments could be used without departing from the scope of this disclosure.

In step 605, a new FBS commences start-up. The FBS can be a new FBS in the county or a FBS that previously was located in the county but had either been relocated or powered-down.

During start-up, the FBS determines its geographical position in step 610. The FBS includes a GPS receiver that is configured to determine the geographical position of the FBS. GPS satellites broadcast signals from space that are picked up and identified by the GPS receiver. The GPS receiver then calculates and provides three-dimensional geographical location (latitude, longitude, and altitude) information plus the time. The FBS can store the geographical position obtained from the GPS receiver.

In step 615, the FBS transmits a start-up message to the FMS. The start-up message can include an identifier for the FBS and the geographical position of the FBS.

In step 620, the FBS receives County Level Information from the FMS. The County Level Information can be included as part of the configuration download from the FMS during start-up of the FBS. The County Level Information can include one or more of: a list of the Total Carriers for the county in which the FBS is located, a list of the Common carriers used by the macros located in the same county in which the FBS is located, a list of the available IX carriers for the county in which the FBS is located, a list of the available HRPD carriers for the county in which the FBS is located, a list of the macro base stations proximate to the FBS, a list of the locations of the macro base stations either proximate to the FBS or in the same county in which the FBS is located, and a list of 1x and HRPD carriers used by each macro base station that is included in the list of macro base stations proximate to the FBS. In some embodiments, the list of macro base stations proximate to the FBS includes only those macro base stations that are located in the same county in which the FBS is located. In some embodiments, the list of macros base stations proximate to the FBS includes only those macro base stations that are located in the same market in which the FBS is located.

In step 625, the FBS determines Local Level Information. The FBS can use the County Level Information to determine the Local Level Information. For example, the FBS can use a local macro condition to identify extra available carriers. The local macro condition can include a listing of macro base stations in proximity to the FBS and a listing of corresponding 1x and HRPD carriers used by each of the macro base stations in proximity to the FBS. Additionally, the macro condition can include location information for the macro base stations. The FBS can identify the macro base stations that overlay the FBS or that are in close proximity to the FBS. The FBS can determine any of the Common Carriers at the county level that are not used by the macro base stations that overlay the FBS or that are in close proximity to the FBS. If the FBS identifies that one or more carriers from the list of Common Carriers are not used by the macro base stations that overlay the FBS or that are in close proximity to the FBS, the FBS saves the un-used carriers as extra available carriers (or local available carriers). For example, if the FBS identifies that one (1) HRPD and two (2) IX carriers are not used by the macro base stations that overlay the FBS or that are in close proximity to the FBS, the FBS determines that it can use an additional HRPD carrier and two additional IX carriers.

In step 630, the FBS determines if there are available carriers for use. The FBS determines if there are available carriers identified in the County level information or extra available carriers identified in step 625.

If the FBS determines that there are either available carriers or extra available carriers, the FBS can select one of such carriers as an operation carrier in step 635. The FBS can select a 1x carrier for 1x use and a HRPD carrier for HRPD use.

If the FBS determines that no available carriers exist, then the FBS selects a carrier from the list of County Level Common Carriers in step 640. The FBS can select a 1x carrier for 1x use or a HRPD carrier for HRPD use.

Although the present disclosure has been described with an exemplary embodiment, various changes and modifications may be suggested to one skilled in the art. It is intended that the present disclosure encompass such changes and modifications as fall within the scope of the appended claims.

**Claims**

1.  A method for configuring a femtocell base station (160) in a wireless communications network, the method comprising:

    transmitting (615) a start-up message to a femtocell management system (300);
    receiving (620) county level information from the femtocell management system, the county level information including a list of at least one of unused carriers, the unused carriers being the carriers allocated to the county but that are unused by the macro base stations located in the county, and a wireless communication network protocol technology type for the at least one of the unused carriers; and
    determining (625) local level information, wherein determining local level information comprises:
    identifying a plurality of county level overlay macro base stations, the overlay macro base stations being macro base stations whose cells overlay the femtocell base station;
    identifying a list of common carriers allocated to the plurality of macro base stations; in the county area;
    identifying a list of common carriers allocated to the overlay macro base stations; and
    determining a list of the unused common carriers by removing or subtracting carriers listed in the overlay macro base station common carriers list from carriers listed in the macro base station common carriers list,
    saving the list of the unused common carriers as a list of extra available carriers for use by the femtocell base station; and
    determining (630) if there are available carriers for use by the femtocell base station, identified in the county level information list of the at least one of unused carriers received or in the local level information list of unused common carriers determined;
    wherein the unused carriers are received split into at least two portions comprising a first portion and a second portion, and the first portion is saved as a list of carriers available for a first wireless communication network protocol technology type and the second portion is saved as a list of carriers available for a second wireless communication network protocol technology type.

2.  The method as set forth in Claim 1, further comprising:
    determining (610) a location of the femtocell base station.

3.  The method as set forth in Claim 2, wherein determining the location comprises receiving global positioning system information and determining a latitude and longitude of the femtocell base station.

4.  The method as set forth in Claim 1, wherein receiving further comprises receiving a list of macro base stations proximate to the femtocell base station.

5.  The method as set forth in Claim 1, wherein said wireless communication network protocol types comprise a 1X and a high rate packet data communication.

6.  A femtocell base station (160) capable of communicating in a wireless communications network, the femtocell base station comprising:
    a controller (210) configured to:

    transmit a start-up message to femtocell management system (300);
    receive county level information from the femtocell management system, the county level information including a list of at least one of unused carriers, the unused carriers being the carriers allocated to the county but that are unused by the macro base stations located in the county, and a wireless communication network protocol technology type for the at least one of the unused carriers; and
    determine (625) local level information, wherein determining local level information comprises:

identify a plurality of county level overlay macro base stations, the overlay macro base stations being macro base stations whose cells overlay the femtocell base station;

identify a list of common carriers allocated to the plurality of macro base stations; in the county area;

identify a list of common carriers allocated to the overlay macro base stations; and

determine a list of the unused common carriers by removing or subtracting carriers listed in the overlay macro base station common carriers list from carriers listed in the macro base station common carriers list, save the list of the unused common carriers as a list of extra available carriers for use by the femtocell base station; and

determine (630) if there are available carriers for use by the femtocell base station, identified in the county level information list of the at least one of unused carriers received or in the local level information list of unused common carriers determined

wherein the unused carriers are received split into at least two portions comprising a first portion and a second portion, and the first portion is saved as a list of carriers available for a first wireless communication network protocol technology type and the second portion is saved as a list of carriers available for a second wireless communication network protocol technology type.

7. The femtocell base station as set forth in Claim 6, wherein the controller further is configured to identify additional available carriers.

8. The femtocell base station as set forth in Claim 6, wherein the controller is configured to select the operation carrier from the list of common carriers allocated to each of a plurality of macro base stations when no available carriers exist.

## Patentansprüche

1. Verfahren zum Konfigurieren einer Femtozellen-Basisstation (160) in einem drahtlosen Kommunikationsnetzwerk, wobei das Verfahren Folgendes umfasst:

Übertragung (615) einer Inbetriebnahmenachricht zu einem Femtozellenverwaltungssystem (300);

Empfang (620) von Informationen auf Provinzebene von dem Femtozellenverwaltungssystem her, wobei die Informationen auf Provinzebene eine Liste von mindestens einem ungenutzten Träger einschließen, wobei die ungenutzten Träger die Träger sind, die der Provinz zugeordnet sind, aber von den Makrobasisstationen in der Provinz nicht genutzt werden, und einen Drahtloskommunikationsnetzwerk-Protokolltechniktyp für den mindestens einen ungenutzten Träger; und

Ermittlung (625) von Informationen auf lokaler Ebene, wobei die Ermittlung von Informationen auf lokaler Ebene Folgendes umfasst:

Identifizierung einer Vielzahl von überlagernden Makrobasisstationen auf Provinzebene, wobei die überlagernden Makrobasisstationen Makrobasisstationen sind, deren Zellen die Femtozellen-Basisstation überlagern;

Identifizierung einer Liste von gemeinsamen Trägern, die der Vielzahl von Makrobasisstationen in dem Provinzbereich zugeordnet sind;

Identifizierung einer Liste von gemeinsamen Trägern, die den überlagernden Makrobasisstationen zugeordnet sind; und

Ermittlung einer Liste der ungenutzten gemeinsamen Träger, indem man Träger, die in der Liste der gemeinsamen Träger der überlagernden Makrobasisstation aufgeführt sind, von Trägern entfernt oder subtrahiert, die in der Liste der gemeinsamen Träger der Makrobasisstation aufgeführt sind,

Speichern der Liste der ungenutzten gemeinsamen Träger als eine Liste von extra verfügbaren Trägern zur Verwendung durch die Femtozellenbasisstation; und

Ermittlung (630), ob es verfügbare Träger zur Verwendung durch die Femtozellen-Basisstation gibt, die in der Liste von Informationen auf Provinzebene des mindestens einen ungenutzten empfangenen Trägers identifiziert sind oder in der Liste von Informationen auf lokaler Ebene von ermittelten ungenutzten gemeinsamen Trägern;

wobei die ungenutzten Träger in mindestens zwei Teile geteilt aufgenommen werden, mit einem ersten Teil und einem zweiten Teil, und das erste Teil als eine Liste von Trägern gespeichert wird, die für einen ersten Drahtloskommunikationsnetzwerk-Protokolltechniktyp verfügbar sind, und das zweite Teil als eine Liste von Trägern gespeichert wird, die für einen zweiten Drahtloskommunikationsnetzwerk-Protokolltechniktyp verfügbar sind.

**2.** Verfahren nach Anspruch 1, das des Weiteren Folgendes umfasst:
Ermittlung (610) eines Standorts der Femtozellen-Basisstation.

**3.** Verfahren nach Anspruch 2, wobei die Ermittlung des Standorts den Empfang globaler Positionierungssystem-Informationen sowie die Ermittlung einer geographischen Breite und Länge der Femtozellen-Basisstation umfasst.

**4.** Verfahren nach Anspruch 1, wobei der Empfang des Weiteren den Empfang einer Liste von Makrobasisstationen umfasst, die in der Nähe der Femtozellen-Basisstation liegen.

**5.** Verfahren nach Anspruch 1, wobei besagte Drahtloskommunikationsnetzwerk-Protokolltypen eine 1X- und eine Paketdatenkommunikation mit hoher Übertragungsgeschwindigkeit umfassen.

**6.** Femtozellen-Basisstation (160), die fähig ist, in einem drahtlosen Kommunikationsnetzwerk zu kommunizieren, wobei die Femtozellen-Basisstation Folgendes umfasst:
eine Steuervorrichtung (210), konfiguriert, um:

eine Inbetriebnahmenachricht an das Femtozellenverwaltungssystem (300) zu übertragen;
Informationen auf Provinzebene von dem Femtozellenverwaltungssystem zu empfangen, wobei die Informationen auf Provinzebene eine Liste von mindestens einem ungenutzten Träger umfassen, wobei die ungenutzten Träger die Träger sind, die zu der Provinz zugeordnet sind, aber von den Makrobasisstationen nicht benutzt werden, die in der Provinz positioniert sind,
und einen Drahtloskommunikationsnetz-Protokolltechniktyp für den mindestens einen ungenutzten Träger; und
Informationen auf lokaler Ebene zu ermitteln (625), wobei die Ermittlung von Informationen auf lokaler Ebene Folgendes umfasst:

Identifizierung einer Vielzahl von überlagernden Makrobasisstationen auf Provinzebene, wobei die überlagernden Makrobasisstationen Makrobasisstationen sind, deren Zellen die Femtozellen-Basisstation überlagern;
Identifizierung einer Liste von gemeinsamen Trägern, die der Vielzahl von Makrobasisstationen in dem Provinzbereich zugeordnet sind;
Identifizierung einer Liste von gemeinsamen Trägern, die den überlagernden Makrobasisstationen zugeordnet sind;
Ermittlung einer Liste der ungenutzten gemeinsamen Träger, indem man Träger, die in der Liste der gemeinsamen Träger der überlagernden Makrobasisstation aufgeführt sind, von Trägern entfernt oder subtrahiert, die in der Liste der gemeinsamen Träger der Makrobasisstation aufgeführt sind,
Speichern der Liste der ungenutzten gemeinsamen Träger als eine Liste von extra verfügbaren Trägern zur Verwendung durch die Femtozellenbasisstation; und
Ermittlung (630), ob es verfügbare Träger zur Verwendung durch die Femtozellen-Basisstation gibt, die in der Liste von Informationen auf Provinzebene des mindestens einen ungenutzten empfangenen Trägers identifiziert sind oder in der Liste von Informationen auf lokaler Ebene von ermittelten ungenutzten gemeinsamen Trägern,
wobei die ungenutzten Träger in mindestens zwei Teile geteilt aufgenommen werden, mit einem ersten Teil und einem zweiten Teil, und das erste Teil wird als eine Liste von Trägern gespeichert, die für einen ersten Drahtloskommunikationsnetzwerk-Protokolltechniktyp verfügbar sind, und das zweite Teil wird als eine Liste von Trägern gespeichert, die für einen zweiten Drahtloskommunikationsnetzwerk-Protokolltechniktyp verfügbar sind.

**7.** Femtozellen-Basisstation nach Anspruch 6, wobei die Steuervorrichtung des Weiteren konfiguriert ist, um zusätzliche verfügbare Träger zu identifizieren.

**8.** Femtozellen-Basisstation nach Anspruch 6, wobei die Steuervorrichtung konfiguriert ist, um den Betriebsträger aus der Liste von gemeinsamen Trägern auszuwählen, die jedem aus einer Vielzahl von Makrobasisstationen zugeordnet sind, wenn keine verfügbaren Träger existieren.

**Revendications**

**1.** Procédé de configuration d'une station de base de femto-cellule (160) dans un réseau de communications sans fil, le procédé comprenant :

transmettre (615) un message de démarrage à un système de gestion de femto-cellule (300) ;

recevoir (620) des informations de niveau départemental en provenance du système de gestion de femto-cellule, les informations de niveau départemental incluant une liste d'au moins l'une des porteuses inutilisées, les porteuses inutilisées étant les porteuses attribuées au département mais qui ne sont pas utilisées par les macro stations de base situées dans le département, et un type de technologie de protocole de réseau de communication sans fil pour l'au moins une des porteuses inutilisées ; et

déterminer (625) des informations de niveau local, où la détermination des informations de niveau local comprend :

identifier une pluralité de macro stations de base superposées de niveau départemental, les macro stations de base superposées étant des macro stations de base dont les cellules recouvrent la station de base de femto-cellule ;

identifier une liste de porteuses communes attribuées à la pluralité de macro stations de base dans la zone départementale ;

identifier une liste de porteuses communes attribuées aux macro stations de base superposées ; et

déterminer une liste des porteuses communes inutilisées en éliminant ou en soustrayant des porteuses énumérées dans la liste des porteuses communes de la macro station de base superposée des porteuses énumérées dans la liste des porteuses communes de la macro station de base,

sauvegarder la liste des porteuses communes inutilisées sous forme de liste des porteuses supplémentaires disponibles pour être utilisées par la station de base de femto-cellule ; et

déterminer (630) s'il existe des porteuses disponibles destinées à être utilisées par la station de base de femto-cellule, identifiées dans la liste d'informations de niveau départemental de l'au moins une des porteuses inutilisées reçues ou dans la liste d'informations de niveau local de porteuses communes inutilisées déterminées ;

où les porteuses inutilisées sont reçues divisées en au moins deux parties comprenant une première partie et une deuxième partie, et la première partie est sauvegardée sous forme de liste de porteuses disponibles pour un premier type de technologie de protocole de réseau de communication sans fil et la deuxième partie est sauvegardée sous forme de liste de porteuses disponibles pour un deuxième type de technologie de protocole de réseau de communication sans fil.

2. Procédé selon la revendication 1, comprenant en outre :
   déterminer (610) un emplacement de la station de base de femto-cellule.

3. Procédé selon la revendication 2, où déterminer l'emplacement comprend la réception d'informations de système de positionnement global et la détermination d'une latitude et d'une longitude de la station de base de femto-cellule.

4. Procédé selon la revendication 1, où la réception comprend, en outre, recevoir une liste de macro stations de base à proximité de la station de base de femto-cellule.

5. Procédé selon la revendication 1, où lesdits types de protocole de réseau de communication sans fil comprennent une communication de données par paquets 1X et une communication de données par paquets à haut de débit.

6. Station de base de femto-cellule (160) capable de communiquer dans un réseau de communications sans fil, la station de base de femto-cellule comprenant :
   un contrôleur (210) configuré pour :

transmettre un message de démarrage à un système de gestion de femto-cellule (300) ;

recevoir des informations de niveau départemental en provenance du système de gestion de femto-cellule, les informations de niveau départemental incluant une liste d'au moins l'une des porteuses inutilisées, les porteuses inutilisées étant les porteuses attribuées au département mais qui ne sont pas utilisées par les macro stations de base situées dans le département, et un type de technologie de protocole de réseau de communication sans fil pour l'au moins une des porteuses inutilisées ; et

déterminer (625) des informations de niveau local, où la détermination des informations de niveau local comprend :

identifier une pluralité de macro stations de base superposées de niveau départemental, les macro stations de base superposées étant des macro stations de base dont les cellules recouvrent la station de base de femto-cellule ;

identifier une liste de porteuses communes attribuées à la pluralité de macro stations de base dans la zone départementale ;

identifier une liste de porteuses communes attribuées aux macro stations de base superposées ; et

déterminer une liste des porteuses communes inutilisées en éliminant ou en soustrayant des porteuses énumérées dans la liste des porteuses communes de la macro station de base superposée des porteuses énumérées dans la liste des porteuses communes de la macro station de base,

sauvegarder la liste des porteuses communes inutilisées sous la forme d'une liste de porteuses supplémentaires disponibles pour être utilisées par la station de base de femto-cellule ; et

déterminer (630) s'il existe des porteuses disponibles pour être utilisées par la station de base de femto-cellule, identifiées dans la liste d'informations de niveau départemental d'au moins une des porteuses inutilisées reçues ou dans la liste d'informations de niveau local de porteuses communes inutilisées déterminées

où les porteuses inutilisées sont reçues divisées en au moins deux parties comprenant une première partie et une deuxième partie, et la première partie est sauvegardée sous forme de liste de porteuses disponibles pour un premier type de technologie de protocole de réseau de communication sans fil et la deuxième partie est sauvegardée sous forme de liste de porteuses disponibles pour un deuxième type de technologie de protocole de réseau de communication sans fil.

**7.** Station de base de femto-cellule selon la revendication 6, où le contrôleur est, en outre, configuré pour identifier des porteuses additionnelles disponibles.

**8.** Station de base de femto-cellule selon la revendication 6, où le contrôleur est configuré pour sélectionner la porteuse de fonctionnement dans la liste des porteuses communes attribuées à chacune d'une pluralité de macro stations de base lorsqu'aucune porteuse ne se trouve disponible.

[Fig. 1]

[Fig. 2]

EP 2 494 709 B1

[Fig. 3]

300

325

305

330

I/O IF ⟷ Controller ← KEYPAD

→ DISPLAY

335

310

MEMORY

315

BASIC OPERATING SYSTEM

320

DATABASE

[Fig. 4]

[Fig. 5]

| | |
|---|---|
| PRE-PLAN SPECTRUM | 505 |
| IDENTIFY AVAILABLE CARRIERS | 510 |
| SPLIT RESOURCES | 515 |
| RECEIVE START-UP MESSAGE FROM FBS | 520 |
| IDENTIFY FBS LOCATION AND PROXIMATE BS's | 525 |
| SEND COUNTY LEVEL INFORMATION | 530 |

[Fig. 6]

**EP 2 494 709 B1**

REFERENCES CITED IN THE DESCRIPTION

**Patent documents cited in the description**

- WO 2008093100 A2

- WO 2009111392 A2